Europäisches Patentamt

(19) European Patent Office

Office européen des brevets

(11) Veröffentlichungsnummer: **0 129 770**

**A1**

(12) # EUROPÄISCHE PATENTANMELDUNG

(21) Anmeldenummer: **84106708.5**

(22) Anmeldetag: **13.06.84**

(51) Int. Cl.⁴: **B 27 K 3/36**
**A 01 N 31/02**

(30) Priorität: 24.06.83 DE 3322815
17.02.84 DE 3405842

(43) Veröffentlichungstag der Anmeldung:
02.01.85 Patentblatt 85/1

(84) Benannte Vertragsstaaten:
AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Paulus, Wilfried, Dr.
Deswatinesstrasse 90
D-4150 Krefeld(DE)

(72) Erfinder: Jäger, Gerhard, Dr.
Gellertstrasse 18
D-5090 Leverkusen(DE)

(72) Erfinder: Genth, Hermann, Dr.
Am Heckerhof 60
D-4150 Krefeld(DE)

(72) Erfinder: Fischler, Hans-Michael, Dr.
Buschstrasse 112
D-4150 Krefeld(DE)

(54) Verwendung von Jodpropargylalkohol als Fungizid in Holzschutzmitteln.

(57) Jodpropargylalkohol wird als Fungizid in Holzschutzmitteln verwendet.

EP 0 129 770 A1

Croydon Printing Company Ltd.

- 1 -

**BAYER AKTIENGESELLSCHAFT**     5090 Leverkusen, Bayerwerk

Konzernverwaltung RP
Patentabteilung

Verwendung von Jodpropargylalkohol als Fungizid in
Holzschutzmitteln

Die Erfindung betrifft die Verwendung von Jodpropargylalkohol als Wirkstoff in Holzschutzmitteln.

Die mikrobizide Wirkung von Jodpropargylverbindungen ist
aus der JA 74/100037, DE-OS 20 09 960 und DE-OS 31 16 653
bekannt. Sie sind jedoch nicht ohne besondere Aufwendungen herzustellen und weisen ungünstige Löslichkeitseigenschaften auf.

Aus der US 30 75 938 ist bekannt, Jodpropargylalkohol in
Latex-Farben zum Schutz gegen Mikroorganismen zu verwenden.
Als Mikroorganismen werden Bakterien der Arten Pseudomonas,
Bazillus und Proteus angegeben (Beispiel 1).

Es wurde gefunden, Jodpropargylalkohol als Wirkstoff in
Holzschutzmitteln zu verwenden.

Jodpropargylalkohol hat eine ausgezeichnete Wirkung gegen
holzzerstörende und holzverfärbende ·Pilze. Die antimikrobielle Aktivität gegenüber holzzerstörenden und holzver-

Le A 22 426 - Ausland

färbenden Pilzen ist überraschenderweise sprunghaft größer als gegen Bakterien. Dies war auf Grund der US 30 75 938 nicht zu erwarten.

Jodpropargylalkohol ist aus Beilstein Bd. I, 4. Aufl., 1918, S. 455 bekannt. Er kann hergestellt werden, indem man Propargylalkohol in wäßriger oder wäßrig-methanolischer Lösung mit Jod unter einem Alkalihydroxid, wie z.B. Natriumhydroxid oder Kaliumhydroxid, bei 0 bis 30°C reagieren läßt oder Propargylalkohol mit einem Alkalijodid, wie z.B. Natriumjodid oder Kaliumjodid, äquivalenten Mengen eines Oxidationsmittels, wie z.B. Natriumhypochlorit, und eines Alkalihydroxids in wäßriger Lösung umsetzt.

Unter Holzschutz wird erfindungsgemäß der Schutz von nicht lebendem Holz gegen holzzerstörende und holzverfärbende Pilze verstanden. Insbesondere sei Holz genannt, das für die Verwendung in der Technik zubereitet worden ist.

In Beispiel 2 werden Pilze der folgenden Gattungen genannt:

Coniophora, wie Coniophora puteana,
Lentinus tigrinus
Polyporus, wie Polyporus versicolor,
Aureobasidium pullulaus
Sclerophoma pityophila

Le A 22 426

Je nach dem Anwendungsgebiet kann der erfindungsgemäße Wirkstoff in die üblichen Formulierungen überführt werden, wie Lösungen, Emulsionen, Suspensionen, Pulver, Pasten und Granulate. Diese können in an sich bekannter Weise hergestellt werden, z.B. durch Vermischen des Wirkstoffs mit einem Streckmittel, aus flüssigen Lösungsmitteln und/oder festen Trägerstoffen, gegebenenfalls unter Verwendung von oberflächenaktiven Mitteln, wie Emulgatoren und/oder Dispergiermitteln, wobei beispielsweise im Falle der Benutzung von Wasserstreckmitteln, gegebenenfalls auch organische Lösungsmittel als Hilfsmittel verwendet werden können.

Feste Trägerstoffe, die bei der Herstellung der fertigen Anwendungsform des Wirkstoffes zugegeben werden können, können beispielsweise feinteilige Aluminiumoxide, Silikate, Carbonate, Eisenoxide, Gips oder Holzmehl sein.

Oberflächenaktive Mittel können handelsübliche Emulgatoren, wie Aryl- oder Alkylsulfonate, ethoxylierte Alkylphenole, Fettalkohole oder Alkylamine oder Dispergiermittel wie Polycarbonsäureester, Polyvinylalkohol, Lignin, Sulfitablauge oder Methylcellulose sein.

Organische Lösungsmittel für den erfindungsgemäßen Wirkstoff können beispielsweise Alkohole, niedere aliphatische Alkohole, vorzugsweise Ethanol oder Isopropanol, oder Benzylalkohol, Ketone, wie Aceton oder Methylethylketon, flüssige Kohlenwasserstoffe, wie Benzinfraktionen, chlorierte Kohlenwasserstoffe, wie 1,2-Dichlorethan sein.

Le A 22 426

Die Anwendungsformen des erfindungsgemäßen Wirkstoffes
enthalten im allgemeinen 5 bis 100 Gew.-%, bevorzugt 10
bis 90 Gew.-%, des Jodpropargylalkohols als Wirkstoff.
Die für den Schutz des Holzes erforderliche Anwendungskonzentration des erfindungsgemäßen mikrobiziden Mittels
richtet sich nach der Art und dem Vorkommen der zu bekämpfenden Pilze, sowie nach der betreffenden Holzart.
Die optimale Einsatzmenge kann durch eine Testreihe ermittelt werden. Im allgemeinen liegt die Anwendungskonzentration im Bereich von 0,001 bis 5 Gew.-%, vorzugsweise von 0,01 bis 1 Gew.-%.

Der erfindungsgemäße Wirkstoff kann in den Formulierungen
in Mischungen mit anderen bekannten organischen oder
anorganischen Fungiziden und/oder Insektiziden vorliegen.
Beispielsweise seien die folgenden Wirkstoffe genannt:
Benzimidazolyl-methylcarbamate, Tetramethylthiuramdisulfid, Zinksalze von Dialkyldithiocarbamaten, 2,4,5,6-
Tetrachlor-isophthalonitril, Thiazolylbenzimidazol, Mercaptobenzthiazol, Isothiazolinone, Benzisothiazolinon,
Phenolderivate, wie 2 -Phenyl-phenol, (2,2'-Dihydroxy-
5,5'-dichlor)-diphenylmethan, Formaldehyd abspaltende
Verbindungen, wie Benzylalkoholemiformal und N-Methylolchloracetamid. In diesen Gemischen kann eine synergistische Verstärkung der Wirksamkeit auftreten.

Le A 22 426

0129770

## Beispiel 1

Herstellung von Jodpropargylalkohol

### Variante a:

In eine Lösung von 112,1 g (2 Mol) Propargylalkohol in 1.000 ml Wasser werden bei 20°C portionsweise 507,6 g (2 Mol) Jod unter Rühren eingetragen und gleichzeitig eine Lösung von 100 g Natriumhydroxid in 300 ml Wasser zugetropft. Eine Stunde nach Beendigung der Jodzugabe wird das Reaktionsgemisch auf 1.000 g Eis gegossen, mit konzentrierter Salzsäure sauer gestellt und filtriert. Das Filtrat wird fünfmal mit je 300 ml Dichlormethan extrahiert. Durch Eindampfen der organischen Phase erhält man 291 g Jodpropargylalkohol in Form schwach gelblich gefärbter Kristalle vom Schmelzpunkt 38 - 39°C.

### Variante b:

In eine Lösung von 112,1 g (2 Mol) Propargylalkohol in 800 ml Wasser werden nacheinander 80 g Natriumhydroxid und 332 g (2 Mol) Kaliumjodid gegeben. Bei 3 - 10°C werden innerhalb von drei Stunden dazu 1.240 ml einer zwölfprozentigen Natriumhypochlorit-Lösung getropft. Die Lösung wird anschließend unter Kühlung mit konzentrierter Salzsäure angesäuert und, wie bei Variante a beschrieben, aufgearbeitet. Man erhält 313 g Jodpropargylalkohol vom Schmelzpunkt 38 - 39°C.

Le A 22 426

**Beispiel 2**

Zum Nachweis der Wirksamkeit gegen holzzerstörende und holzverfärbende Pilze werden die minimalen Hemm-Konzentrationen (MHK) von Jodpropargylalkohol bestimmt:

Ein Agar, der aus Bierwürze und Pepton hergestellt wird, wird mit Jodpropargylalkohol in Konzentrationen von 0,1 mg/l bis 5000 mg/l versetzt. Nach Erstarren des Agars erfolgt Kontamination mit Reinkulturen der in der Tabelle aufgeführten Testorganismen. Nach zweiwöchiger Lagerung bei 28°C und 60 bis 70 % relativer Luftfeuchtigkeit wird die MHK bestimmt. MHK ist die niedrigste Konzentration an Wirkstoff, bei der keinerlei Bewuchs durch die verwendete Mikrobenart erfolgt, sie ist in der nachstehenden Tabelle angegeben.

Le A 22 426

**Tabelle 1:**

Angabe der MHK Werte in mg/l bei der Einwirkung von Jodpropargylalkohol auf Pilze

| Testorganismen | MHK in mg/l |
|---|---|
| **Holzzerstörende und holzverfärbende Pilze:** | |
| Coniophora puteana | 1 |
| Lentinus tigrinus | 5 |
| Polyporus versicolor | 2 |
| Aureobasidium pullulans | 2 |
| Sclerophoma pityophila | 3,5 |
| **Bakterien (Vergleich):** | |
| Escherichia coli | 75 |
| Staphylococcus aureus | 150 |

**Beispiel 3**

Bestimmung der toxischen Grenzwerte (kg/m$^3$ Holz) von
Iodpropargylalkohol für Coniophora puteana bzw. Polyporus versicolor auf Kiefern- bzw. Buchenholz.

Die Bestimmung der toxischen Grenzwerte erfolgt in Anlehnung an die von H.P. Sutter, INT. Biodeterioration
Bulletin 14 (3), 1978, Seiten 95 bis 99, beschriebenen
Methode.

Le A 22 426

Für die Tests werden jeweils frisch geschnittene dünne Stirnholzstücke (Größe 40x40 mm, Dicke etwa 2 mm) im Vakuum mit Lösungen unterschiedlicher Iodpropargyl-alkoholkonzentration getränkt. Mit einer Wirkstoff-konzentration werden jeweils gleichzeitig 15 Holzproben getränkt.

Die Menge des absorbierten Wirkstoffes wird aus der Lösungsmittelretention (die durch Wiegen des Holzstückchens vor und nach der Imprägnierung bestimmt wird), der Holzdichte und der Konzentration des Wirkstoffes in der zurückbleibenden Imprägnierungslösung bestimmt. Die Lösungsmittelretention wird nach der folgenden Gleichung berechnet:

$$\text{Lösungsmittelretention} = \frac{\text{Gewicht der Tränkung} - \text{Anfangsgewicht}}{\text{Anfangsgewicht}} \times \text{Dichte}$$

Vor dem mykologischen Test werden die Prüflinge getrocknet und mit Propylenoxid sterilisiert. Dann werden die Proben in Petrischalen (Durchmesser: 90 mm) mit dem Testpilz auf Malzagar gebracht; mit Hilfe kleiner Plastikkreuze wird ein Abstand von 5 mm zwischen der Holzprobe und der Agaroberfläche eingehalten. Die Holzstückchen in den Petrischalen werden 6 Wochen bei einer Temperatur von 21 bis 23°C gelagert. Holzstückchen, die nicht ausreichend gegen Pilzbefall geschützt sind, sind nach dieser Zeit zerstört oder zerfallen

Le A 22 426

leicht. Holzstückchen, die durch ein Fungizid ausreichend geschützt sind, zeigen keine sichtbare Veränderung durch Pilzbefall. In der folgenden Tabelle
sind die Konzentrationswerte des Wirkstoffs im Holz
als Toxizitätsgrenzen (kg/m$^3$) angegeben; die Toxizitätsgrenzen zeigen die Konzentrationen, bei der das
Holz noch angegriffen und bei der das Holz nicht mehr
angegriffen wird.

| Testpilz | Toxizitätsgrenzwerte von iodpropargylalkohol | |
|---|---|---|
| | Substrat | Grenzwerte in kg/m3 |
| Coniophora puteana | Kiefernsplinzholz | 0,05 - 0,11 |
| Polyporus versicolor | Buchenholz | < 0,19 |

Le A 22 426

0129770

Patentansprüche:

1. Verwendung von Jodpropargylalkohol als Wirkstoff in Holzschutzmitteln.

2. Verwendung nach Anspruch 1, dadurch gekennzeichnet, daß das Holzschutzmittel 5 bis 100 Gew.-% Jodpropargylalkohol enthält.

3. Verwendung nach den Ansprüchen 1 und 2, dadurch gekennzeichnet, daß 0,001 bis 5 Gew.-% Jodpropargylalkohol bezogen auf das zu schützende Material eingesetzt werden.

Le A .22 426

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | CENTRAL PATENTS INDEX BASIC ABSTRACTS JOURNAL, Teil C, AGDOC Woche B47, November 1979, Zusammensetzung 84990 B/47, London, GB; & JP - A - 79 132 228 (SANKYO K.K.) 05.04.1978 * Insgesamt * | 1-3 | B 27 K    3/36 A 01 N   31/02 |
| D,X | US-A-3 075 938  (R.L. JOHNSON) * Patentansprüche 1-5,8 * | 1-3 | |
| A | EP-A-0 040 106  (ROBERTS CONSOLIDATED INDUSTRIES) * Patentansprüche * | 1-3 | |
| A | CHEMICAL ABSTRACTS, Band 92, Nr. 25, 23. Juni 1980, Seite 573, Nr. 214902u, Columbus, Ohio, US; & JP - A - 79 148 718 (SANKYO CO., LTD.) 22.11.1979 * Insgesamt * | 1-3 | RECHERCHIERTE SACHGEBIETE (Int. Cl. ³)  A 01 N B 27 K |

Der vorliegende Recherchenbericht wurde für alle Patentansprüche erstellt.

| Recherchenort DEN HAAG | Abschlußdatum der Recherche 09-10-1984 | Prüfer FLETCHER A.S. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503. 03.82